# EUROPEAN PATENT APPLICATION

(11) **EP 3 643 985 A1**
(43) Date of publication of application: **29.04.2020**
(21) Application number: 18202365.5
(22) Date of filing: 24.10.2018
(51) Int. Cl.: F24S 25/61

(54) **MOUNTING SYSTEM FOR SOLAR PANELS AND METHOD FOR MOUNTING SOLAR PANELS**

(71) Applicant: Yokk Solar AB, 451 00 Uddevalla (SE)
(72) Inventor: MALMSTRÖM, Jonas, 451 43 Uddevalla (SE); ZACKRISSON, Joachim, 451 92 Uddevalla (SE)
(74) Representative: AWA Sweden AB

(57) **Abstract**

A method and system for mounting of solar panels (4) on a membrane roof (1), the method comprising providing elongate fixation elements (2) on the membrane roof (1), the elongate fixation elements (2) comprising a lower part with a base (21) formed by transversely protruding flanges (22a,22b) having a width, and an upper part comprising a profile enabling interaction with a clamping device (5) for holding the solar panels (4). Further, strips of membrane (3) are provided, with a width exceeding the width of the flanges (22a,22b). The strips (3) are affixed to the flanges (22a,22b) of the elongate fixation elements (2) and to the underlying membrane roof (1), thereby affixing the elongate fixation elements (2) to the membrane roof (1).

## Description

### Technical field of the invention

The present invention relates to a method and a system for mounting of solar panels on a membrane roof.

### Background

Over the last year, the use of solar panels to generate electricity has been increasing dramatically. Solar panels are often placed on the roofs of buildings, and in particular on membrane roofs. However, arrangement on the roof is often cumbersome and expensive, and may also deteriorate the properties of the roof.

Membrane roofs, or membrane roofings, is a type of roof where a membrane layer is arranged as a top layer on the roof. The membrane can be based on synthetic rubber, preferably thermoset rubber, such as EDPM, CSPE, CR or ECR, or other rubber, thermoplastics, such as PVC, or CPA, CPE, EIP, NBP, PIB or TPO, modified bitumen, or other materials. The modified bitumen can e.g. be made from asphalt and a variant of rubber modifiers and solvents. There are several ways of connecting pieces of the membrane, such as by heating, where heat is applied to the seams to melt the junction together. However, cold-applied adhesives and self-adhesive membranes may also be used. The membrane typically has a thickness in the range 0.5-3 mm, and preferably within the range 0.7-1.5 mm.

One known system to mound solar panels on flat membrane roofs without penetration of the roof cap sheet is the so-called ballast method. Here, a self-standing mounting system for solar panels is placed on the roofs and keep it in place using ballast.

Such systems are typically designed to induce relatively low wind load, and occasionally the dead weight of the mounting system and the solar panels is sufficient to keep the system in place without additional ballast. Such systems are e.g. commercially available from K2 Systems Gmbh, and are e.g. sold under the trade names "K2 D-Dome" and "K2 S-Dome". An another type of ballast system is disclosed DK 2012 00176.

An advantage of this type of method is that it works without any penetration of the existing roof coverage. However, there are also several disadvantages. The additional ballast increases the total load on the roof, which may lead to a need for reinforcement of the roof. Further, this method does not work for roofs with a pitch exceeding about 5 degrees, i.e. it can only be used for essentially flat roofs. Still further, the load is here concentrated to the small areas where ballast lies above profile/protective mat, which leads to a further strain on the roof, and a consequent need for reinforcement. For roofs with insulation below the roof cap sheet, there is also a risk that recessions develop in the areas with increased load. In such recessions water and dirt can accumulate, which over time brings a risk to the integrity of the roof. The method is also costly both in terms of material and in terms of labor.

Another known type of method for mounting solar panels on membrane roofs is where there is a penetration of the roof cap sheet. The roofs are, when this type of method is used, typically flat roofs, but in some cases methods of this type are used for membrane sloped roofs, and possibly also with steep pitch.

Such systems are e.g. commercially available from Weland Stål AB. In one such method, which is further described in the Weland Stål assembly instruction MA 1008 and MA 5103, a steel mounting plate is fastened with screws through the roof cap sheet into the underlying load carrying substructure. Then the roof is waterproofed again using a waterproofing membrane (bitumen, rubber, PVC etc depending on the roof cap) that is applied in an area of typically about 1 m² on and around the mounting plate. A fixation element is then fastened using bolts that protrude from the mounting plate or in a part in the center of the mounting plate. Rails used to fix solar panels can then be fastened to the fixation element. Other examples of such methods/systems are found in DE 8605215 U1, DE 8531673 U1, FR 2713687 and FR 2949145.

Mounting with this method provides good anchoring of the mounting structure in the load carrying substructure. This method can also be used also for sloped roofs with pitch > 5 degrees. Further, a relatively low total surface load is induced by the system, and a relatively good load distribution over the combined surface of the mounting plates is provided. However, also this method is affected by certain disadvantages. First of all, the penetration of the roof cap sheet leads to an increased risk of water leakage, and may also lead to a loss of warranty from the original roofing company. Further, the method is costly both in terms of material (mounting plates, screws, sealing membrane, fixation element, rails) and in terms of labor. Further, even though the load on the roof is lower in this method than in the previously discussed ballast system, the load from the solar panels are concentrated to the mounting plates, and thus, reinforcement of the roof may be necessary to ensure its integrity.

A third previously known method type for mounting solar panels on flat roofs is using mounting plates without penetration of the roof cap sheet. Such a system is e.g. commercially available from CW Lundberg AB, and e.g. sold under the trade names M-082 and M-277. This system resembles the above-discussed system from Weland Stål AB, but without penetration of the roof cap sheet. Such a system is further disclosed in SE 520 398

With this method a steel mounting plate is fixated without screws by i) welding the plate on the existing roof cap; and ii) adding an additional membrane sheet of about 1 m² on and around the mounting plate.

Then, similar to the second type of method described above, a fixation element is fastened using bolts that protrude from the mounting plate. Rails used to fix solar panels can then be fastened to the fixation element.

Advantages with this group of methods include no penetration of the roof cap, and consequently no loss of waterproofing warranty, a relatively low total surface load induced by the system, a relatively good load distribution over the combined surface of the mounting plates, and a relatively good load distribution over the combined surface of the mounting plates.

However, this type of method is also prone with certain disadvantages. For example, the method is costly both in terms of material (mounting plates, fixation membrane, fixation element, rails) and in terms of labor. Further, the loads from the solar panels are concentrated to the mounting plates, leading to high loads at certain areas. Specifically, as the mounting plates and the additional fixation membrane are expensive, a cost optimization leads to fairly strong and heavy (expensive) overlaying rails in order to reduce the number of plates, which in turn leads to further concentration of the loads to the remaining plates. Further, the resistance against wind loads is entirely depending on the quality of the underlying roof membrane and the quality of its fixation to the underlying substructure at the locations where the mountings are situated.

There is therefore a need for an improved method and system for mounting of solar panels on membrane roofs, and in particular a method/system which is more cost-effective, which provides improved anchorage, and consequently can be used on roofs with a higher pitch, and/or which provides less load and strain on the underlying roof.

### Summary of the invention

It is therefore an object of the present invention to provide a method and a system for mounting of solar panels on a membrane roofs which alleviates all or at least some of the above-discussed drawbacks of the presently known systems.

This object is achieved by means of method and a system for mounting solar panels on a membrane roof as defined in the appended claims.

In accordance with a first aspect of the invention, there is provided a method for mounting of solar panels on a membrane roof, comprising:
providing elongate fixation elements on the membrane roof, the elongate fixation members comprising a lower part with a base formed by transversely protruding flanges having a width, and an upper part comprising a profile enabling interaction with a clamping device for holding the solar panels;
providing strips of membrane with a width exceeding the width of the flanges;
and affixing the strips of membranes to the flanges of the elongate fixation elements and to the underlying membrane roof, thereby affixing the elongate fixation elements to the membrane roof.

According to another aspect of the invention, there is provided a system for mounting of solar panels on a membrane roof, comprising elongate fixation elements to be placed on the membrane roof, the elongate fixation members comprising a lower part with a base formed by transversely protruding flanges having a width, and an upper part comprising a profile enabling interaction with a clamping device for holding the solar panels; and strips of membrane with a width exceeding the width of the flanges, the membrane strips arranged to be affixed to the flanges of the elongate fixation elements and to the underlying membrane roof, thereby affixing the elongate fixation elements to the membrane roof.

By this method and system, a number of advantages are obtained, First of all, there is no penetration of the existing roof cap sheet, and consequently the warranties for the roof remain as before, and there is no need for additional waterproofing warranties. This is of particular relevance when considering membrane roofs made by membrane, PU-isolation and metal, since it is complicated to attach screws through the insulation in a way that does not lead to a compression of this.

The method/system of the present invention generates a very low load on the pre-existing roof. Preferably, the load onto the membrane roof is within the range of 0.7-2.0 kN/m², and preferably within the range of 0.8-1.5 kN/m², and most preferably within the range of 1.0-1.3 kN/m². This is the load including the solar panels. As a comparison, the loads generated by methods using the ballast type method would be in the range of about 2-6 kN/m², Often, the building is not dimensioned for such an additional load.

Further, the method/system of the present invention may be used on any roof, independent of the roof slope. Thus, the present invention work for essentially any roof pitch, and also for roofs with high pitch up to 45 degrees.

In comparison, e.g. the ballast method, as discussed above, is limited to use solely for roofs with maximally 3-5 degrees of roof pitch.

The present invention provides a very cost-effective method/system for mounting solar panels on a pre-existing membrane roof. In particular, the present invention enables mounting on existing roofs, regardless of the roof pitch. Further, the present invention allows mounting of solar panels with a very uniform load distribution, thereby alleviating the need for further re-enforcements of the roof as well as the requirements of fixation of the roof membrane to the substructure.

The elongate fixation elements are preferably in the form of rails, and preferably have an essentially uniform cross-section along their lengths.

The elongate fixation elements are preferably arranged in the direction of the pitch of the roof, i.e. extending from ridge to eaves. Hereby, the elongate fixation elements do not hinder water from running down the roof, thereby allowing the roof to function in the same way as prior to installation of the solar panels. Further, such an arrangement of the elongate fixation elements prevents accumulation of water, dirt, etc.

Preferably, a plurality of elongate fixation elements are arranged on the membrane roof, and arranged parallel to each other. Each solar panel is preferably connected to two adjacent elongate fixation elements. Differently put, at least two elongate fixation elements may be provided to support each solar panel.

Further, the length of the elongate fixation elements preferably exceeds the width and/or length of the solar panels, allowing the elongate fixation elements to extend past the solar panel arranged thereon. The rails may also be long enough to carry a plurality of solar panels.

The long total length of the elongate fixation elements leads to a good distribution of the load over the roof, both for carrying the weight of the solar panels and the elongate fixation elements, etc, but also to carry e.g. the weight of snow, the load exerted by wind, etc.

The fixation of the elongate fixation elements to the roof by the membrane strips has been found to be surprisingly effective. The large total area of the membrane strips fixing the rails leads to a good and fully safe adhesion of the rails to the existing roof membrane. Further, the fixation can easily be adjusted for different weights, different roof pitches, etc, e.g. by appropriate selection of the width of the membrane strips.

The mounting system of the present invention comprises few and relatively simple components, making it cost-effective to produce. Further, the installation of solar panels with the method/system of the present invention is very fast, and requiring a very limited labor input.

The solar panels are preferably clamped directly to the elongate fixation elements, by means of clamps of any type, as is per se known in the art. The elongate fixation elements may to this end e.g. be provided with an upwardly directed groove or channel, having flanges at or in the vicinity of the top on both sides. The flanges may e.g. be directed inwardly, i.e. into the groove, channel, and towards each other. The clamps may hereby interact with the flanges for fixation of the solar panels. In one embodiment, the flanges also directed somewhat downwardly, towards the base, thereby forming a downwardly facing indentation.

In one embodiment, the solar panels are mounted directly onto the elongate fixation elements, e.g. using clamps. This results in a module array parallel to the roof surface with a relatively low gap between the modules and the roof surface.

However, the solar panels may alternatively be connected to an additional support structure, which in turn is connected to the elongate fixation elements. Such an alternative may e.g. be used in case the solar panels are to be arranged in a tilted or upstanding position, i.e. in a position which is non-parallel to the roof plane.

The elongate fixation elements may be formed by metal, and preferably by aluminum. However, other materials, such as steel or wood preservative, may also be used.

The lower part of the elongate fixation elements, with the base formed by transversely protruding flanges forms a base plate with a total width which may be in the range of 2-30 cm, and preferably within the range of 5-20 cm, and most preferably within the range of 7-15 cm, such as most preferably within the range of 8-12 cm. In a preferred embodiment, the total width of the base is about 11 cm.

Upper part of the elongate fixation elements, comprising the profile enabling interaction with the clamps, and e.g. in the shape of a groove or channel, may have a width in the range of 2-10 cm, and preferably within the range of 3-6 cm, and most preferably within the range 3-5 cm. In a preferred embodiment the width is about 4 cm.

The width of the flanges of the base, protruding away from the upper part, is preferably in the range of 2-10 cm, and more preferably within the range of 2-7 cm, and most preferably within the range of 2.5-5 cm. In a preferred embodiment, this width is about 3.5 cm.

The height of the elongate fixation elements is preferably within the range of 1-7 cm, and more preferably within the range of 1.5-5 cm, and most preferably within the range of 2-4 cm. In a preferred embodiment, the height is about 2.5 cm.

Preferably, the affixing of the membrane strips is made by heating the membrane strips, thereby welding the membrane strips to the flanges and the membrane roof. Hereby, the affixing may e.g. be effected by welding the membrane strips to the flanges of the elongate fixation elements and to the membrane roof. However, a hot-melt adhesive may also be used. However, alternatively, the membrane strips may be connected to the elongate fixation elements and the membrane roofs by cold-applied adhesive, and self-adhesive membrane strips may also be used.

The membrane strips may be of the same material as the underlying membrane roof, but may alternatively be of a different material. The membrane strips can be based on synthetic rubber, preferably thermoset rubber, such as EDPM, CSPE, CR or ECR, or other rubber, thermoplastics, such as PVC, or CPA, CPE, EIP, NBP, PIB or TPO, modified bitumen, or other materials. The modified bitumen can e.g. be made from asphalt and a variant of rubber modifiers and solvents. The membrane strips may have a thickness in the range 0.5-8 mm, and preferably within the range 1-7 mm, and more preferably within the range 4-6 mm.

The membrane strips may have the same length as the elongate fixation elements to which they are connected. The strips of membrane may also have a length exceeding the length of the elongate fixation elements. However, alternatively, the membrane strips may be of a length shorter than the length of the elongate fixation elements. For some applications it suffices that only part of the length of the elongate fixation elements are affixed to the membrane roof by the membrane strips. Several shorter membrane strips may also be provided along the length of the elongate fixation elements, in e.g. a side-by-side arrangement, in an overlapping arrangement, or with gaps between the membrane strips. Thus, differently put, the length of the strips of membrane may have a length less than the length of the elongate fixation elements, and wherein two or more strips of membrane are used to affix each elongate fixation element.

The strips of membrane preferably have a width in the range of 5-50 cm, and preferably within the range of 7-35 cm, and most preferably within the range of 8-25 cm.

These and other features and advantages of the present invention will in the following be further clarified with reference to the embodiments described hereinafter.

### Brief description of the drawings

For exemplifying purposes, the invention will be described in closer detail in the following with reference to embodiments thereof illustrated in the attached drawings, wherein:
Fig 1 is a picture showing a mounting system in accordance with an embodiment of the present invention;
Fig. 2a is a cross-sectional view of an elongate fixation element in accordance with an embodiment of the present invention, and Fig. 2b is a perspective view of a short part of the elongate fixation element of Fig. 2a;
Fig. 3 is a schematic illustration of a first step of a method in accordance with one embodiment of the present invention;
Fig. 4 is a schematic illustration of a second step of a method in accordance with one embodiment of the present invention;
Fig. 5 is a schematic illustration of a third step of a method in accordance with one embodiment of the present invention;
Fig. 6 is a picture showing a partly mounted mounting system in accordance with an embodiment of the present invention;
Fig. 7 is a schematic illustration of a fourth step of a method in accordance with one embodiment of the present invention;
Fig. 8 is a picture showing a partly mounted mounting system in accordance with an embodiment of the present invention;
Fig. 9 is a schematic illustration of a final step of a method in accordance with one embodiment of the present invention; and
Fig. 10 is a picture showing a fully mounted mounting system in accordance with an embodiment of the present invention.

### Detailed description of preferred embodiments

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

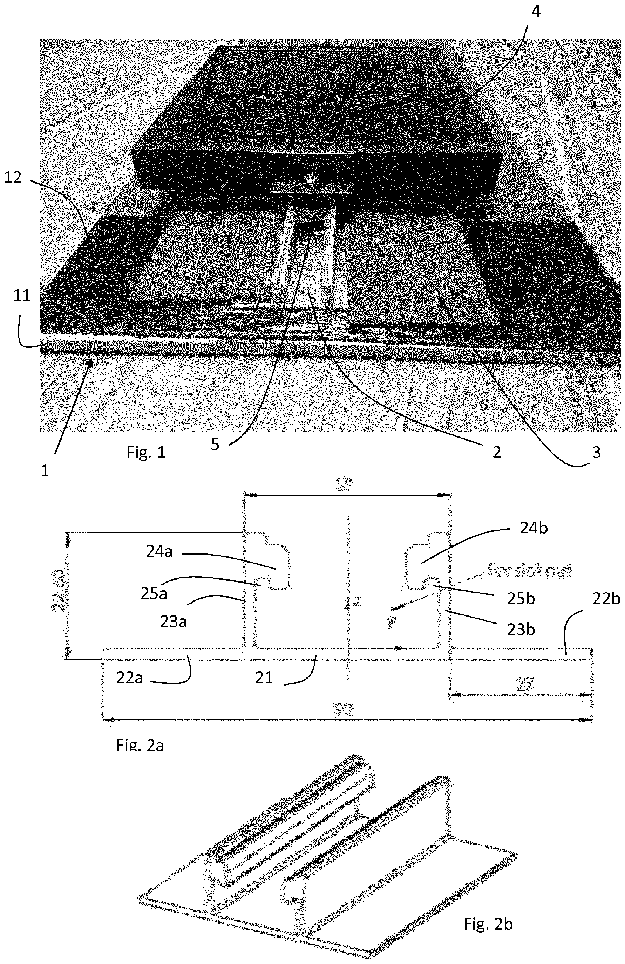

With reference to Fig. 1, a membrane roof 1 comprises a substructure 11. This can e.g. be a wooden tongue-in-groove board or polymer based insulation on top of corrugated metal roof. On top of this substructure 11, a roof cap 12 in the form of a membrane, such as bitumen membrane, is arranged. This is fixed onto the underlying substructure using established procedures, e.g. using screws and welding.

On top of this membrane roof 1, an elongate fixation element 2 is arranged, here in the form of a rail with flanges. An example of a profile that is possible to use is disclosed in further detail in the following, with reference to Fig. 2.

The elongate fixation element is affixed to the membrane roof by membrane strips 3, which are laid over the base flanges of the elongate fixation element 1, and extending onto the membrane roof 1. The membrane strips are here strips of bitumen, but other types of membrane strips may also be used, as discussed in the foregoing.

A solar panel 4 is connected to the elongate fixation element by clamps 5 arranged at both sides of the solar panel 5. The clamps may e.g. comprise a plate which is inserted into a groove/channel of the elongate fixation element, to interact with inwardly protruding flanges in the groove/channel, and a bolt to clamp the plate towards the flanges.

Preferably, two clamps are used on each of the longer sides of the solar panel, at about ¼ of the total length from the short side.

The solar panel 4 shown in Fig. 1 is a small solar module, but solar panels having different lengths, widths and heights, as is per se known in the art, may be used. For example, a 60 cell silicon solar panel may be used, having standard dimensions of about 1.0 m by 1.7 m.

With reference to Figs. 2a and 2b, an exemplary embodiment of the elongate fixation elements 2 will now be discussed. The elongate fixation elements may be formed by metal, and preferably by aluminum. However, other materials, such as steel, may also be used.

The lower part of the elongate fixation elements forms a base 21 formed by transversely protruding flanges 22a, 22b, forming a base plate with a total width which may be in the range of 2-30 cm, and preferably within the range of 5-20 cm, and most preferably within the range of 7-15 cm, such as most preferably within the range of 8-12 cm. In the illustrated embodiment, the total width of the base is 93 mm. The width of the flanges of the base, protruding away from the upper part, is preferably in the range of 2-10 cm, and more preferably within the range of 2-7 cm, and most preferably within the range of 2.5-5 cm. In the illustrated embodiment, this width is 27 mm.

The upper part of the elongate fixation elements comprises two parallel walls 23a, 23b, extending perpendicular to the base 21. The upper structure forms the profile enabling interaction with the clamps. The walls here forms a groove or channel between them. The distance between the walls may be in the range of 2-10 cm, and preferably within the range of 3-6 cm, and most preferably within the range 3-5 cm. In the illustrated embodiment, the distance between the outer sides of the walls is 39 mm.

The height of the elongate fixation elements is preferably within the range of 1-7 cm, and more preferably within the range of 1.5-5 cm, and most preferably within the range of 2-4 cm. In the illustrated embodiment, the height is 22.5 mm.

The walls are further provided with inwardly projecting flanges 24a, 24b, arranged at or in the vicinity of the upper end of the walls. These flanges are preferably also directed downwards, towards the base, thereby forming an indentation 25a, 25b facing the bottom. However, the flanges arranged to interact with the clamp may also be structured in other ways, such as being arranged on the outside of the walls, projecting outwardly, or the like.

In the following, an exemplary embodiment for mounting an array of solar panels on a roof will be discussed. The solar panels are here mounted on a bitumen membrane roof, but may also be arranged on other types of membrane roofs. In this exemplary embodiment, the solar panels are mounted in landscape format, i.e. with the long side of each panel being parallel to the ridge of the roof. However, it is also feasible to arrange the solar panels in a portrait format, i.e. with the long sides of each panel being perpendicular to the ridge of the roof. Alternatively, it is also feasible to arrange the solar panels in other directions, such as in slanted, oblique orientations.

The solar panels are in this exemplary embodiment arranged parallel to the roof surface. However, as an alternative it is also feasible to arrange the solar panels in an elevated, tilted disposition, whereby the plane of each solar panel forms an angle to the roof surface.

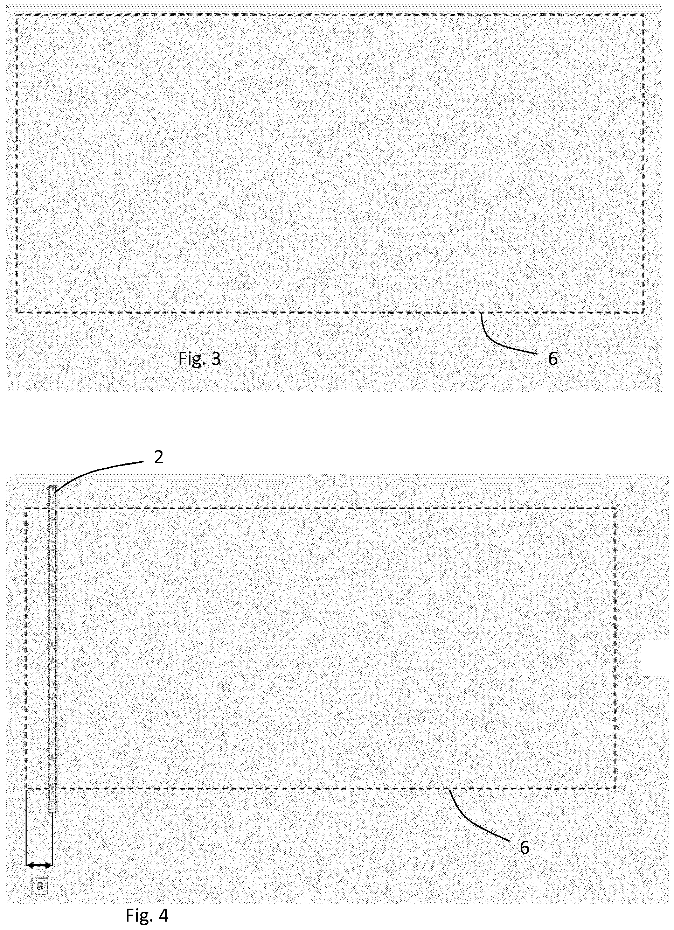

As a first step of this exemplary embodiment, the edges of the module array area 6 are measured out and marked on the roof cap using spray paint, chalk line, or the like, as illustrated in Fig. 3.

A first elongate fixation element 2, rail, is then placed at a certain distance a from the edge of the module array, as illustrated in Fig. 4. The length and vertical placement of the rail 2 is chosen such that it extends a suitable length, e.g. about 0.05 m, above and below the edge of the module array area 6 to allow for fixing of the end clamps. If desired, the rails 2 can extend even further above or below the module array area 6 to allow for the fixing of additional system components, such as cable ladders for DC cable. The rails can be provided and placed in one piece or in several pieces that are joined together edge to edge.

Depending on e.g. the pitch of the roof, the elongate fixation elements 2 may be arranged on the roof without being connected, held in place only by friction. However, for certain application, such as for roofs with higher pitch, the elongate fixation elements can alternatively be temporarily fixed to the roof cap using e.g. a suitable adhesive.

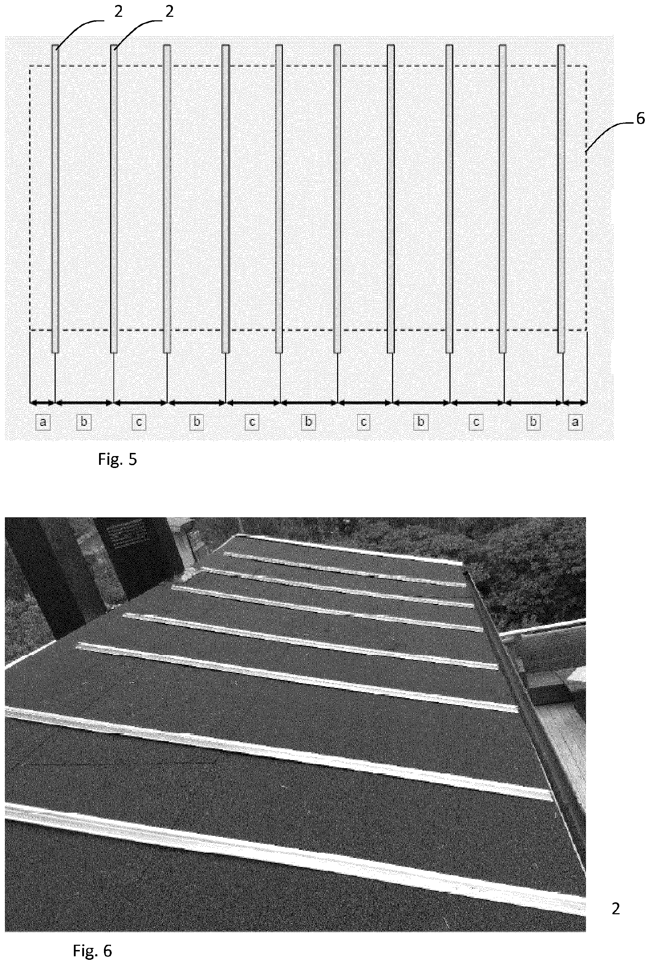

The remaining elongate fixation elements 2 are then placed on the module array area 6 with alternating center distance b and c, as illustrated in Fig. 5. To facilitate the arrangement of the elongate fixation elements, it is advantageous to use wooden or metal spacers to ensure swift placement at the correct center distance.

The elongate fixation elements 2, rails are here placed in the direction of the pitch of the roof, from ridge to eaves, with two rails per column in the module array. The rails are preferably spaced apart in accordance with recommendation of the module manufacturer such that the resulting position of the module clamps on the module frame ensure a high stability against wind and snow loads.

The picture of Fig. 6 shows a membrane roof on which elongate fixation elements have been arranged, in the same way as discussed with reference to Fig. 5.

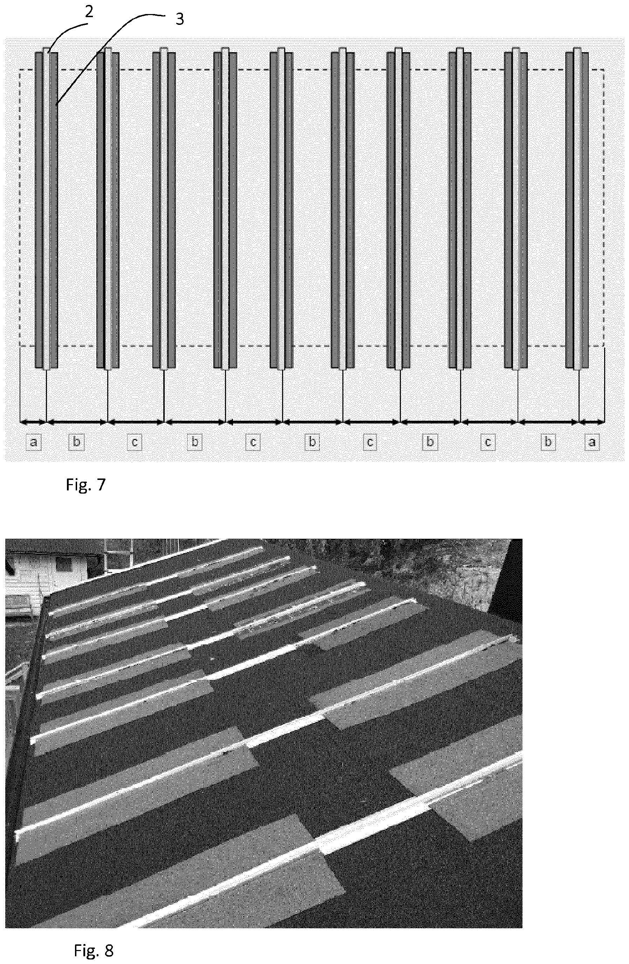

The rails are then fixed to the membrane roof by using membrane strips 3, as illustrated in Fig. 7. The membrane strips are preferably arranged on both sides of the elongate fixation member, thereby affixing each side of the elongate fixation element to the roof. The membrane strips have a width sufficient to over the whole, or at least an appropriate part, of the base flanges of the elongate fixation elements, and to extend distance away from the flanges onto the membrane roof. A suitable strip width is 10 cm, but other widths are possible. It is advantageous to use strips in rolls that have been pre-cut to suitable with by the manufacturer. Alternatively it is possible to cut strips from rolls in standard with, typically 1 m, prior to installation or on site.

The membrane strips may be affixed using adhesive or the like. However, preferably the membrane strips are affixed by welding, by heating the membrane strips to a suitable temperature.

In case of bitumen membrane roofs an example of suitable bitumen strip with good mechanical strength is the commercially available membranes sold by the trade names Mataki UnoTech or Bauder Pro.

In a preferred embodiment, the membrane strip is welded onto the flange on one side of the rail and the adjacent existing roof membrane using an established welding method such as hot air welding with a gas torch and a pressure roller. Then another membrane strip is welded onto the flange on the other side of the rail in the same way. This is repeated for all the rails.

It is advantageous to work in the direction of the pitch, from the ridge towards the eaves.

It is further advantageous to use a pressure roller having a width essentially equal to the width of the strip.

It is usually, but not always, advantageous to weld strips along essentially the full length of the rails, as illustrated in Figure 7. The membrane strips may also be even longer, to extend past one or both the ends of the elongate fixation element.

However, it is alternatively possible to attach stripes only on selected sections of the rails as shown by the example in Figure 8. In this embodiment, two membrane strips are arranged on each side of the elongate fixation element, and with a gap between them. More than two membrane strips may also be used on each side, such as three, four or five strips. It is also possible to use shorter strips, but arranged them without any gap between them, such as in a side-by-side arrangement, or with an overlap between the strips.

In the illustrative example of Fig. 8, the strips are arranged in pairs directly opposing each other on each side of the elongate fixation element. However, it is also feasible to arrange the strips on each side in a staggered configuration.

The optimal length of the strips may be chosen based on parameters such as quality and adherence of the existing roof membrane to the substructure, dimensioning wind loads, roof pitch and width of the strips.

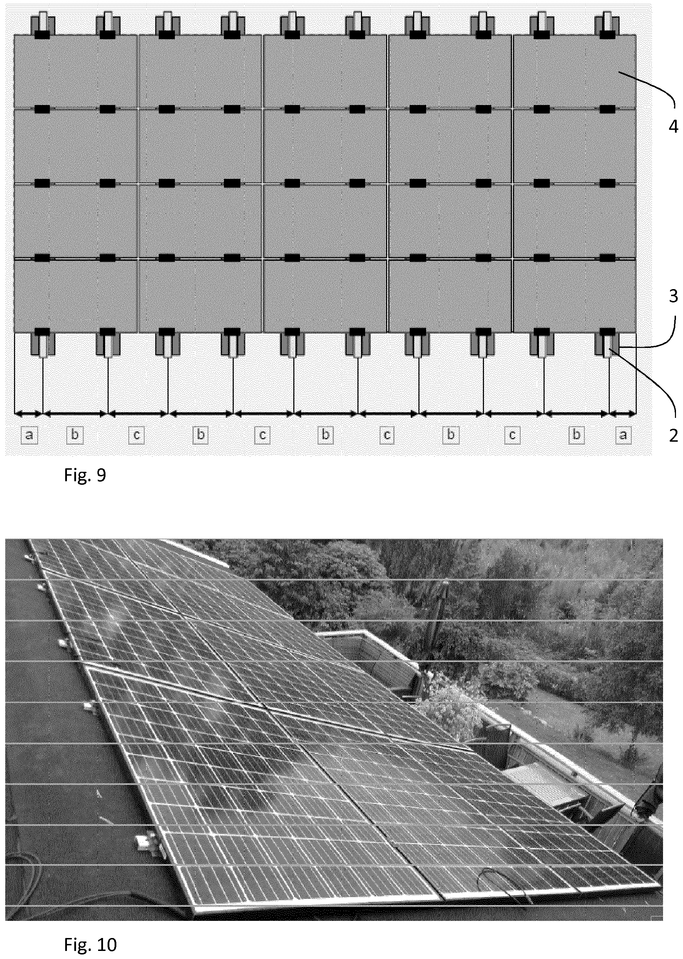

The solar panels are then mounted onto the elongate fixation elements with clamps using established and previously known methods. It is usually advantageous to mount the panels column wise, from the bottom to the top. As a result a complete module array is achieved, as illustrated in in Fig. 9 and Fig. 10.

In the illustrative example of Fig. 9, an array with 20 solar panels is provided. The solar panels may e.g. each have a length I = 1.685 m and a width w = 1.000 m. However, other dimensions are also feasible. The solar panels are here mounted in landscape orientation in 5 columns and 4 rows.

The distance dy between the rows is defined by the clamps. In this example dy = 0.015 m. The resulting length of the module array is 4*w + 3*dy = 4.045 m.

The distance dx between the columns is chosen to be dx = dy = 0.015 m. The resulting width of the module array is 5*l + 4*dx = 8.485 m.

Ideal position of the clamps may be determined based on the instructions from the solar panel manufacturer. In the illustrative example, the distance a may be a = 0.35 m from the short side.

The resulting centre distance between rails belonging to the same column is b = I - 2*a = 0.985 m and c = 2*a + dy = 0.715 m between rails belonging to different columns.

In the above-discussed embodiment, the solar panels are arranged in parallel with the roof surface, i.e. being clamped directly to the elongate fixation elements. However, the same mounting structure may also, alternatively, be used for mounting solar panels in an elevated, tilted position. In such an embodiment, the elongate fixation elements 2 may be arranged on the roof, and be connected with membrane strips 3, in the same way as in the previously discussed embodiment. Elevated solar panels, such as the above discussed commercially available K2 D-Dome classic or K2 S-Dome classic that have been developed for fixation with ballast alternatively using screws penetrating the roof cap sheet, may then be used, and connected to the elongate fixation elements by corresponding clamps.

The rails are here placed in the same positions as they would have been in the case of ballasting, but are fixated using membrane strips according to the discussion above. In this way, fixation of the system is achieved without neither ballast nor penetration of the roof cap sheet.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for mounting of solar panels on a membrane roof, comprising:
providing elongate fixation elements on the membrane roof, the elongate fixation members comprising a lower part with a base formed by transversely protruding flanges having a width, and an upper part comprising a profile enabling interaction with a clamping device for holding the solar panels;
providing strips of membrane with a width exceeding the width of the flanges;
and affixing the strips of membranes to the flanges of the elongate fixation elements and to the underlying membrane roof, thereby affixing the elongate fixation elements to the membrane roof.

2. The method of claim 1, wherein the step of affixing is made by heating the membrane strips, thereby welding the membrane strips to the flanges and the membrane roof.

3. The method of claim 1 or 2, further comprising providing solar panels, and clamping the solar panels to the elongate fixation elements with clamping elements.

4. The method of any one of the preceding claims, wherein the elongate fixation elements are placed in the direction of the pitch of the roof, from ridge to eaves.

5. The method of any one of the preceding claims, wherein at least two elongate fixation elements are provided to support each solar panel.

6. The method of any one of the preceding claims, wherein the length of the elongate fixation elements exceeds the length/width of the solar panels to be arranged thereon.

7. The method of any one of the preceding claims, wherein the strips of membrane have a width in the range of 5-50 cm, and preferably within the range of 7-35cm, and most preferably within the range of 8-25 cm.

8. The method of any one of the preceding claims, wherein the strips of membrane have a length exceeding the length of the elongate fixation elements.

9. The method of claim 1-7, wherein the length of the strips of membrane have a length less than the length of the elongate fixation elements, and wherein two or more strips of membrane are used to affix each elongate fixation element,

10. A system for mounting of solar panels on a membrane roof, comprising elongate fixation elements to be placed on the membrane roof, the elongate fixation members comprising a lower part with a base formed by transversely protruding flanges having a width, and an upper part comprising a profile enabling interaction with a clamping device for holding the solar panels; and strips of membrane with a width exceeding the width of the flanges, the membrane strips arranged to be affixed to the flanges of the elongate fixation elements and to the underlying membrane roof, thereby affixing the elongate fixation elements to the membrane roof.

11. The system of claim 10, wherein the membrane strips are affixable by welding.

12. The system of claim 10 or 11, further comprising solar panels, said solar panels being clamped to the elongate fixation elements with clamping elements.

13. The system of any one of the claims 10-12, wherein the elongate fixation elements are formed by metal, and preferably by aluminum.

14. The system of any one of the claims 10-13, wherein the width of the flanges is within the range of 2-10 cm, and preferably within the range of 2-7 cm, and most preferably within the range of 2.5-5 cm.

15. The system of any one of the claims 10-14, wherein the load onto the membrane roof is within the range of 0.7-2.0 kN/m², and preferably within the range of 0.8-1.5 kN/m², and most preferably within the range of 1.0-1.3 kN/m².
